## Europäisches Patentamt
## European Patent Office
## Office européen des brevets

(19)

(11) Numéro de publication: **0 119 908**
**B1**

# FASCICULE DE BREVET EUROPÉEN

(12)

(45) Date de publication du fascicule du brevet:
18.03.87

(51) Int. Cl.⁴: **G 01 N 21/88**

(21) Numéro de dépôt: **84400464.8**

(22) Date de dépôt: **08.03.84**

(54) Procédé et dispositif d'éclairage, pour contrôle optique de panneaux solaires.

(30) Priorité: **09.03.83 FR 8303847**

(43) Date de publication de la demande:
**26.09.84 Bulletin 84/39**

(45) Mention de la délivrance du brevet:
**18.03.87 Bulletin 87/12**

(84) Etats contractants désignés:
**DE GB NL**

(56) Documents cité:
**FR-A-2 168 842**

**IBM TECHNICAL DISCLOSURE BULLETIN, vol. 22, no. 1, juin 1979, page 242, New York, US; L.D. THORP: "Triplet lens"**
**IBM TECHNICAL DISCLOSURE BULLETIN, vol. 24, no. 8, janvier 1982, pages 4171-4172, New York, US; M.A. GRIMM et al.: "Illumination source for line scanner"**

(73) Titulaire: **SOCIETE NATIONALE INDUSTRIELLE AEROSPATIALE, 37 boulevard de Montmorency, F-75016 Paris Cedex 16 (FR)**

(72) Inventeur: **Macario, Lucien L'Ancestrale Chemin des Plaines, Allées des Canta- Grilou, F-06370 Mouans- Sartoux (FR)**

(74) Mandataire: **Rinuy, Santarelli, 14, avenue de la Grande Armée, F-75017 Paris (FR)**

EP 0 119 908 B1

## Description

La présente invention concerne de manière générale le contrôle optique des cellules solaires que comporte un panneau solaire; elle vise plus particulièrement l'obtention de l'éclairage nécessaire à ce contrôle. L'invention concerne un procédé d'éclairage pour le contrôle optique de panneaux solaires, ainsi qu'un dispositif d'éclairage pour assurer un tel contrôle.

Ainsi qu'on le sait, un panneau solaire est destiné à capter de l'énergie solaire, sur un satellite par exemple, en vue de sa transformation en énergie électrique. A cet effet, un tel panneau est recouvert d'un grand nombre de cellules solaires qui assurent individuellement une telle transformation en énergie. Ces cellules sont des pièces très vulnérables; du point de vue mécanique en particulier, et leur rendement est très sensible à leur état de surface. Ces panneaux solaires sont généralement associés à des véhicules spatiaux dont ils assurent, à eux seuls, l'alimentation électrique. Compte tenu des durées de service prévues pour de tels véhicules spatiaux (plusieurs années), on exige de la part des panneaux solaires une fiabilité très élevée. C'est pourquoi ces derniers, ainsi que les cellules solaires qui les constituent, sont soumis au sol, avant lancement dans l'espace, à un contrôle optique rigoureux et draconien.

Les matériels d'éclairage actuellement utilisés pour ces opérations de contrôle optique se répartissent en deux grandes catégories selon qu'ils constituent des sources chaudes, ou froides, de lumière.

Les sources chaudes sont généralement constituées par des spots ou des projecteurs de forte puissance. Ces appareils dégagent un flux calorifique très important qui risque d'affecter thermiquement les cellules au cours de leur contrôle. Pour éviter ce risque, ces dispositifs formant source chaude sont dotés de ventilateurs destinés à limiter l'échauffement des cellules éclairées. Ces dispositifs sont de ce fait encombrants et lourds, et leur manipulation est malaisée à contrôler, d'où des risques de détérioration par chocs de certaines cellules. Compte tenu de la forte puissance rayonnée par ces dispositifs, ceux-ci provoquent généralement une grande fatigue oculaire de l'observateur. Cette fatigue est en outre renforcée par la forte chaleur rayonnée vers l'opérateur.

Les sources froides sont le plus souvent constituées par des tubes fluorescents adaptés à ne rayonner qu'une faible énergie calorifique. On utilise en pratique des tubes annulaires équipés d'une lentille centrale d'observation; on parle alors de "circlines". De tels dispositifs restent encombrants ou lourds, ce qui rend leur emploi malaisé et fatiguant pour l'opérateur, donc dangereux pour les éléments en cours d'examen.

L'article de L.D. THORP: "TRIPLET LENS" paru dans IBM Technical Disclosure Bulletin, Vol.22, N° 1, JUIN 1979, p. 242, décrit un générateur de lumière froide faisant usage d'un guide de lumière.

L'invention vise à pallier ces inconvénients, en conduisant à de meilleures conditions de travail pour l'opérateur, donc à un contrôle plus fiable des cellules, et en réduisant les risques de détérioration du matériel examiné.

L'invention propose dans ce but un procédé d'éclairage pour contrôle optique de panneaux solaires tel que décrit dans la revedication 1.

L'invention permet ainsi de dissocier la génération de lumière et la projection d'un faisceau sur un panneau à observer. Les panneaux, de la sorte, sont protégés des dangers inhérents à la production de lumière, ainsi que de l'échauffement de l'environnement qui en résulte généralement. L'invention conduit en outre à une réduction du poids et de l'encombrement des éléments à manipuler à proximité des panneaux.

Pour la mise en oeuvre dudit procédé, l'invention propose en outre un dispositif d'éclairage pour contrôle optique de panneaux solaires tel que décrit dans la revendication 3.

Un tel dispositif se révèle conduire à une très sensible amélioration des conditions de travail d'un contrôleur de panneaux solaires dans la mesure où il n'a plus à porter et à manoeuvrer qu'un projecteur de faible encombrement, et que ce dernier n'envoie de la lumière que là où elle est nécessaire, c'est-à-dire sur les zones en cours de contrôle. La fatigue musculaire et oculaire de l'opération s'en trouve considérablement atténuée.

Il est en fait déjà connu de placer un guide de lumière à proximité d'un générateur de lumière en vue de transmettre de la lumière à distance, en particulier dans le domaine de l'endoscopie, mais il s'agit alors d'éclairer des cavités dont l'accès est malaisé. Il est également connu de procéder ainsi pour l'éclairage d'échantillons observé au travers de microscopes optiques à faible grossissement.

De tels moyens connus n'ont cependant encore jamais été employés dans le domaine du contrôle optique (à l'oeil nu) de panneaux solaires. En outre, il n'est pas connu à ce jour de disposer un projecteur à focale variable au bout d'un tel guide, ni même de modifier les caractéristiques du faisceau issu dudit guide sans toucher au générateur de lumière.

D'autres objets, caractéristiques et avantages de l'invention ressortent de la description qui suit, donnée à titre d'exemple non limitatif, en regard des dessins annexés sur lesquels:
- la figure 1 est une vue latérale d'un dispositif d'éclairage selon l'invention;
- la figure 2 est une vue en coupe longitudinale du projecteur que comporte ledit dispositif; et
- la figure 3 est une vue schématique illustrant les conditions d'utilisation d'un appareil selon l'invention.

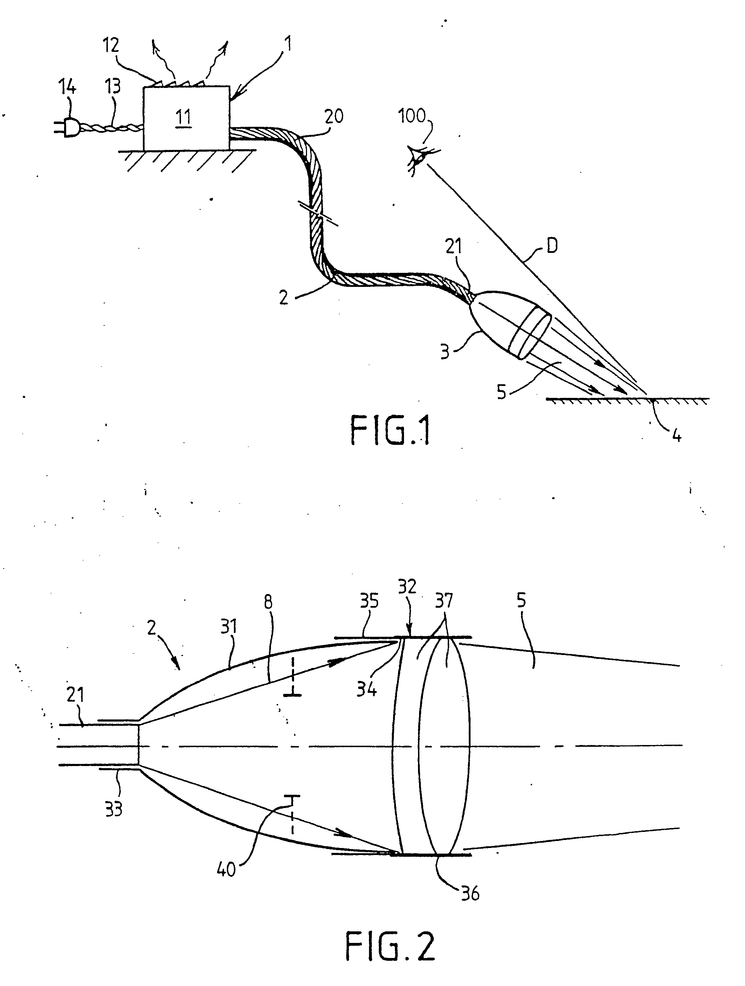

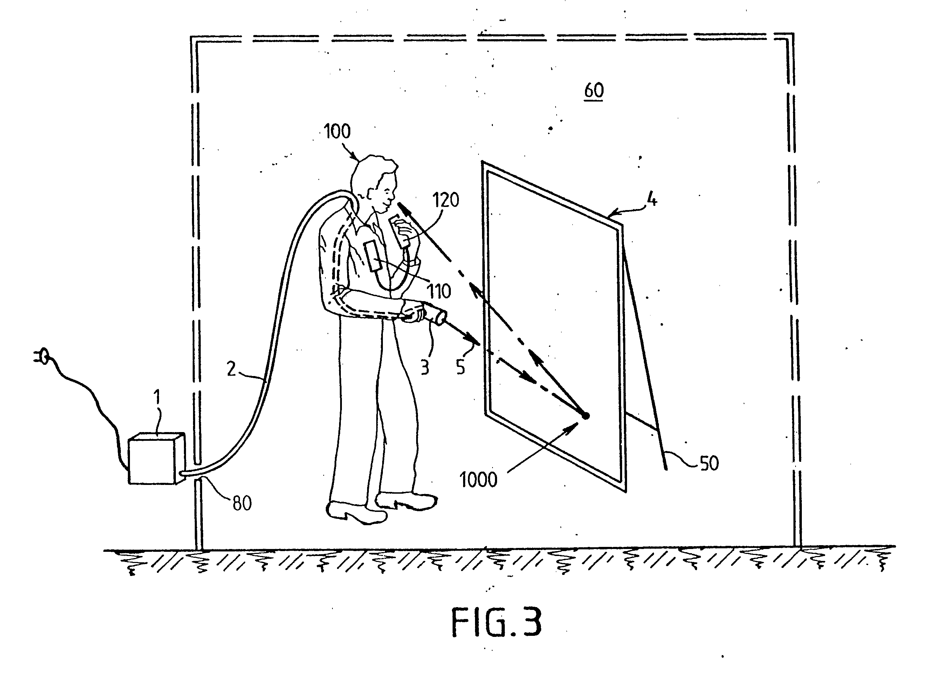

Tel que représenté à titre d'exemple aux figures 1 et 3, un dispositif d'éclairage selon l'invention comporte un générateur de lumière 1, un guide souple de lumière 2 et un projecteur à focale réglable 3.

Le générateur de lumière 1, destiné à être disposé à distance d'un panneau solaire 4, est d'encombrement quelconque. Il est formé d'une source lumineuse (non représentée) formée d'une ampoule par exemple, disposée dans un boîtier parallélépipédique 11. En vue d'évacuer l'énergie calorifique dégagée par la source lumineuse au cours de l'émission de lumière, des évents de ventilation 12 sont avantageusement ménagés sur une face du boîtier 11. Il se produit alors des courants de convexion qui assurent un renouvellement de l'air dans le générateur de lumière 1, et donc une évacuation de calories. Le boîtier 11 est muni d'un câble électrique 13 terminé par une prise 14, destiné à permettre l'alimentation de la source lumineuse à partir d'un réseau électrique principal.

Le boîtier 11 comporte au travers d'une de ses faces un orifice destiné à recevoir un bout 20 du guide souple de lumière 2. Ce guide est avantageusement composé de fibres optiques qui assurent, avec des pertes très minimes, un transfert de la lumière captée par leurs extrémités situées dans le boîtier 11 en regard de la source lumineuse, vers leurs autres extrémités formant l'autre bout 21 du guide de lumière 2.

La lumière transmise par le guide souple de lumière 2 est recueillie par le projecteur 3 qui la transforme en un faisceau 5 plus ou moins concentré. Compte tenu de la souplesse du guide 2 et de la maniabilité du projecteur 3, le faisceau 5 peut frapper le panneau 4 à contrôler sous une incidence et selon une direction quelconques, y définissant un halo dont la taille peut être ajustée en faisant varier la distance entre le projecteur et la zone du panneau à examiner. Toutes les caractéristiques de l'éclairage des zones à observer sont donc réglables en fonction des souhaits et des besoins d'un observateur 100.

La structure du projecteur à focale réglable 3 est détaillée à la figure 2.

Le projecteur 3 est formé d'un support 31 et d'un porte-lentilles 32. Le support est à symétrie axiale et présente une concavité tournée vers l'axe. Sa forme est comprise entre celle d'un cône et celle d'un paraboloïde. Sa surface interne est avantageusement noire.

A l'endroit de son sommet, le support 31 présente un tronçon cylindrique 33 destiné à recevoir pour fixation le second bout 21 du guide de lumière 2.

Au voisinage de son bord 34 de plus grand diamètre, le support est également conformé en cylindre de manière à pouvoir assurer un guidage axial du porte-lentilles 32.

Le porte-lentilles comporte de même une portée cylindrique 35 destinée à coopérer avec la portion en cylindre 34 du support. Il comporte en outre des moyens de maintien 36 pour des lentilles 37. Des reliefs extérieurs y sont avantageusement prévus pour faciliter l'application par des doigts de couples et/ou d'efforts axiaux.

Compte tenu de la forme cylindrique des portées 34 et 35, un déplacement relatif entre support 31 et porte-lentilles 32 résulte d'un simple glissement relatif axial entre lesdites portées.

Les portées 34 et 35 sont, selon une variante avantageuse non représentée dotés de reliefs hélicoïdaux complémentaires qui permettent d'ajuster, par application d'un couple, facile à exercer, la distance entre l'extrémité 21 du guide de lumière 2 formant foyer et les lentilles 37.

Un diaphragme 40, représenté en tiretés, est avantageusement disposé dans le support 31, entre le bout 21 du guide de lumière 2, et les lentilles 37 de manière à favoriser une répartition régulière de la lumière dans le faisceau 5 en éliminant les zones marginales du faisceau 8 issu du guide de lumière 2. Les bords du faisceau 5 sont en outre plus nets et plus réguliers, tandis que la forme du faisceau peut être choisie selon les besoins (rond, carré...).

La figure 3 illustre schématiquement le fonctionnement et le mode d'emploi d'un dispositif selon l'invention.

Le contrôle optique d'un panneau 4, que l'on maintient fixe contre un support 50, se fait de préférence dans une chambre noire 60.

Le générateur de lumière 1 est avantageusement disposé à distance du panneau 4, à l'extérieur de la chambre noire 60, de manière à ce que les calories et la lumière issue des évents dudit générateur ne viennent affecter un opérateur 100 au cours de son travail.

Le guide de lumière 2 traverse la paroi de la chambre noire à la faveur d'un orifice de faibles dimensions 80.

En profitant de sa souplesse et de sa longueur, le guide de lumière 2 est avantageusement glissé dans une manche de veste de l'opérateur. De la sorte, ce dernier, qui tient le projecteur dans la main correspondant à la manche de veste n'a à supporter le poids que dudit projecteur, qui s'avère ainsi très maniable; l'opérateur a donc peu d'efforts musculaires à fournir et sa fatigue reste faible. On peut donc attendre de sa part un contrôle plus fiable.

Compte tenu de la souplesse du guide de lumière 2, et de la maniabilité du projecteur 3, l'opérateur profite d'une certaine liberté de mouvement par rapport au panneau à observer. Par action des doigts sur le porte-lentilles 32, il déplace axialement ce dernier par rapport au support 31, qu'il tient dans la paume de la main. Il ajuste ainsi à volonté les caractéristiques du faisceau de lumière 5 qu'il envoie sur le panneau 4. En particulier, il maintient l'intensité lumineuse reçue par une zone à observer autour d'une valeur suffisamment faible pour ne pas fatiguer ses yeux, mais suffisamment élevée pour lui permettre de déceler les moindres défauts. Il est à noter que par rapport à l'art antérieur, l'opérateur ne reçoit aucune lumière directe depuis le projecteur formant source apparente de lumière froide.

Pour se placer dans les meilleures conditions d'observation, l'opérateur éclaire les zones à observer sous incidence rasante et observe les zones ainsi éclairées selon une direction D très proche de celle du faisceau 5, située dans un même plan perpendiculaire au panneau à contrôler.

Lorsqu'il détecte une cellule 1000 déficiente, compte tenu de sa liberté de mouvement, l'opérateur transmet sans difficultés ses informations, au moyen d'un dictaphone 110 par exemple, et commande lui-même les actions à entreprendre en conséquence, à l'aide par exemple d'un boîtier de télécommande 120, tenu par son autre main, laquelle est libre grâce à la mise en oeuvre de l'invention.

Il est à noter que compte tenu de la légèreté et de la maniabilité du projecteur 3, l'usage de ce dernier ne requiert aucun support. Il peut se tenir avec une seule main et facilite l'examen sous tous les angles de la pièce 4 à contrôler. Il en résulte des risques minimes de contact avec les cellules contrôlées, (ce qui les détérioreraient), surtour lorsque le guide souple de lumière est passé dans une manche de l'observateur. Compte tenu de ce que la source réelle de lumière est à distance, le projecteur constitue une source de lumière froide qui ne conduit qu'à un échauffement minime peu susceptible d'affecter thermiquement les cellules ou d'incommoder l'observateur. Toute latitude est laissée à l'opérateur pour enregistrer les coordonnées et la nature des défauts observés à l'aide de sa seconde main laissée libre.

Compte tenu de la possibilité de disposer le générateur de lumière à distance des panneaux à observer, l'invention conduit à une amélioration des conditions de sécurité lors du contrôle desdits panneaux.

Il va de soi que de nombreuses variantes peuvent être proposées par l'homme de l'art.

La source de lumière, et son boîtier sont de type quelconque; le guide de lumière, réalisé de préférence en un nombre quelconque de fibres optiques, peut voir par ailleurs sa conception évoluer avec les progrès de la technique.

## Revendications

1. Procédé d'éclairage pour le contrôle optique de panneaux solaires comportant une pluralité de cellules solaires (1000), selon lequel on déplace une source (3) de lumière froide devant un panneau solaire (4) objet dudit contrôle pour en observer successivement toutes les cellules (1000), le procédé consistant à générer de la lumière à distance de ce panneau (4), à capter une partie de cette lumière et à la transmettre, jusqu'à proximité du panneau (4) à une unité mobile (3) formant source apparente de lumière froide et avec laquelle l'on projette cette lumière sous incidence rasante sur une zone dudit panneau (4) sous forme d'un faisceau (5) incident dont on ajuste la focalisation en cours de contrôle en fonction des besoins inhérents à l'observation, et à observer ladite zone du panneau (4) selon une direction (D) voisine de celle dudit faisceau (5) incident.

2. Procédé selon la revendication 1, caractérisé en ce que l'on dispose le panneau (4) à contrôler dans une chambre noire (60), et que l'on génère la lumière en dehors de cette chambre noire.

3. Dispositif d'éclairage à l'aide de lumière froide pour le contrôle optique, suivant le procédé de la revendication 1, de panneaux solaires (4) comportant une pluralité de cellules solaires (1000), par observation successive de toutes les cellules (1000) d'un panneau (4), le dispositif comportant un générateur de lumière (1) disposé à distance du panneau (4), un guide de lumière (2) souple dont un bout (20) est raccordé au générateur (1) et qui s'étend jusqu'à proximité du panneau (4) à observer, et un projecteur (3) portable, à focalisation réglable formé d'un support (31) à symétrie axiale présentant un tronçon cylindrique (33) monté sur l'autre bout (21) dudit guide (2).

4. Dispositif selon la revendication 3, caractérisé en ce que le guide de lumière (2) est formé de fibres optiques, ledit support (31) contenant un diaphragme (40) répartiteur de lumière.

5. Dispositif selon la revendication 3 ou la revendication 4, caractérisé en ce que le guide de lumière (2) à une longueur telle, et une souplesse telle, qu'il puisse se glisser dans une manche d'un opérateur (100).

6. Dispositif selon l'une quelconque des revendications 3 à 5, caractérisé en ce que le projecteur (3) est formé d'un support (31) fixé sur l'autre bout (21) du guide de lumière (2), et d'un porte-lentilles (32) doté de lentilles (37) mobile axialement par rapport audit support.

7. Dispositif selon la revendication 6, caractérisé en ce qu'un diaphragme (40) est disposé dans le support (31) entre l'autre bout (21) du guide de lumière et les lentilles (37).

8. Dispositif selon la revendication 6, caractérisé en ce que le projecteur (3) est manoeuvrable à l'aide d'une seule main, le support (31) étant tenu dans la paume, et les doigts ayant prise sur le porte-lentilles (32) pour en ajuster la position vis-à-vis du support (31).

## Patentansprüche

1. Beleuchtungsverfahren zur optischen Kontrolle von Solarzellenpaneelen, die eine Vielzahl von Solarzellen (1000) aufweisen, bei dem man eine Kaltlichtquelle (3) vor einem zu kontrollierenden Solarzellenpaneel (4) verschiebt, um darauf nach und nach alle Zellen (1000) zu betrachten, wobei in einer Entfernung von dem Paneel (4) Licht erzeugt, ein Teil dieses Lichtes erfaßt und bis in die Nähe des Paneels (4) zu einer mobilen Einheit (3) übertragen wird, die eine scheinbare Kaltlichtquelle bildet und mit welcher man dieses Licht unter einem flachen Einfallswinkel auf eine Zone des Paneels (4) in Form eines einfallenden Bündels (5) projiziert, dessen Fokussierung man während der Kontrolle in Abhängigkeit von den sich bei der Betrachtung ergebenden Notwendigkeiten einstellt, und die Zone des Paneels (4) aus einer Richtung (D) betrachtet wird, die der des einfallenden Bündels (5) benachbart ist.

2. Verfahren nach Anspruch 1, dadurch gekennzeichnet, daß man das zu kontrollierende Paneel (4) in einer Dunkelkammer (60) aufstellt und daß man das Licht außerhalb dieser Dunkelkammer erzeugt.

3. Vorrichtung zur Beleuchtung mit Hilfe von Kaltlicht zur optischen Kontrolle von aus einer Vielzahl von Solarzellen (1000) bestehenden Solarzellenpaneelen (4) durch aufeinanderfolgende Beobachtung aller Zellen (1000) eines Paneels (4) nach dem Verfahren des Anspruchs 1, bestehend aus einem Lichterzeuger (1), der entfernt vom Paneel (4) angeordnet ist, einem biegsamen Lichtleiter (2), von dem ein Ende (20) an den Erzeuger (1) angekoppelt ist und der sich bis in die Nähe des zu betrachtenden Paneels (4) erstreckt, und einem am anderen Ende (21) des Leiters (2) angebrachten tragbaren Projektor (3) mit regelbarer Fokussierung, der von einem axialsymmetrischen, einen zylindrischen Abschnitt (33) aufweisenden Stützelement (31) gebildet wird.

4. Vorrichtung nach Anspruch 3, dadurch gekennzeichnet, daß der Lichtleiter (2) aus optischen Fasern gebildet ist, wobei das Stützelement (31) eine Blende (40) zur Lichtaufteilung enthält.

5. Vorrichtung nach Anspruch 3 oder Anspruch 4, dadurch gekennzeichnet, daß der Lichtleiter (2) eine derartige Länge und eine derartige Biegsamkeit besitzt, daß er in einem Ärmel einer Bedienperson (100) gleitend geführt werden kann.

6. Vorrichtung nach einem der Ansprüche 3 bis 5, dadurch gekennzeichnet, daß der Projektor (3) aus einem Stützelement (31), das am anderen Ende (21) des Lichtleiters (2) befestigt ist, und aus einem Linsenträger (32) besteht, der mit im Bezug zum Stützelement axial bewegbaren Linsen (37) bestückt ist.

7. Vorrichtung nach Anspruch 6, dadurch gekennzeichnet, daß eine Blende (40) im Stützelement (31) zwischen dem anderen Ende (21) des Lichtleiters und den Linsen (37) angeordnet ist.

8. Vorrichtung nach Anspruch 6, dadurch gekennzeichnet, daß der Projektor (3) mit Hilfe einer einzigen Hand bedienbar ist, wobei das Stützelement (31) in der Handfläche gehalten wird und die Finger auf dem Linsenträger (32) aufliegen, um damit die Position bezüglich des Stützelements (31) einzustellen.

**Claims**

1. Process of illumination for the optical inspection of solar panels comprising a plurality of solar cells (1000), according to which a source (3) of cold light is displaced in front of a solar panel (4) forming the subject of the said inspection, in order to successively observe all the cells (1000) thereof, the process consisting in generating light at a distance from this panel (4), in collecting a part of this light and in transmitting it to a location in proximity to the panel (4) at a mobile unit (3) forming an apparent source of cold light and with which this light is projected at grazing incidence on a zone of the said panel (4) in the form of an incident beam (5), the focusing of which is adjusted in the course of inspection in dependence upon the requirements inherent in the observation, and in observing the said zone of the panel (4) in a direction (D) close to that of the said incident beam (5).

2. Process according to Claim 1, characterised in that the panel (4) to be inspected is disposed in a dark chamber (60), and in that the light is generated outside this dark chamber.

3. Device for illumination by means of cold light, for optical inspection, according to the process of Claim 1, of solar panels (4) comprising a plurality of solar cells (1000), by successive observation of all the cells (1000) of a panel (4), the device comprising a light generator (1) disposed at a distance from the panel (4), a flexible light guide (2), one end (20) of which is connected to the generator (1) and which extends to a location in proximity to the panel (4) to be observed, and a portable projector (3), which is provided with adjustable focusing and which is formed by a support (31) having axial symmetry and exhibiting a cylindrical portion (33), and which is mounted on the other end (21) of the said guide (2).

4. Device according to Claim 3, characterised in that the light guide (2) is formed of optical fibres, the said support (31) containing a light distribution diaphragm (40).

5. Device according to Claim 3 or Claim 4, characterised in that the light guide (2) has such a length and such a flexibility that it may slide within a sleeve of an operator (100).

6. Device according to any one of Claims 3 to 5, characterised in that the projector (3) is formed by a support (31) fixed on the other end (21) of the light guide (2) and by a lens carrier (32), which is provided with lenses (37) and which is movable axially relative to the said support.

7. Device according to Claim 6, characterised in that a diaphragm (40) is disposed within the support (31) between the other end (21) of the light guide and the lenses (37).

8. Device according to Claim 6, characterised in that the projector (3) is manoeuvrable by means of a single hand, the support (31) being held in the palm, and the fingers having a grip on the lens carrier (32) in order to adjust the position of the latter relative to the support (31).

FIG.1

FIG.2

1

FIG.3

0 119 908